# EUROPEAN PATENT SPECIFICATION

(11) **EP 3 051 982 B1**
(45) Date of publication and mention of the grant of the patent: **08.08.2018**
(21) Application number: 14771671.6
(22) Date of filing: 03.09.2014
(51) Int. Cl.: A47C 27/08, A01K 1/015

(54) **LIVESTOCK BED WITH AIR CHAMBERS**
NUTZTIERBETT MIT LUFTKAMMERN
MATELAS POUR BÉTAIL AVEC CHAMBRES À AIR

(30) Priority: 02.10.2013 US 201314044641
(43) Date of publication of application: 10.08.2016
(73) Proprietor: GEA Farm Technologies, Inc., Naperville, IL 60563 (US)
(72) Inventor: WASUCK, Ivanovich, Munnsville, New York 13409 (US); FEDOR, Derrick J., Holmen, WI 54636 (US); METTELMAN, David J., Whitesboro, New York 13492 (US)
(74) Representative: KNH Patentanwälte Neumann Heine Taruttis PartG mbB
(86) International application number: PCT/US2014/053790
(87) International publication number: WO 2015/050662

(56) References cited:
- WO-A1-2012/103645
- GB-A- 2 109 864
- JP-A- H10 215 719
- RU-C- 1 771 625
- US-A- 5 604 945

## Description

### FIELD AND BACKGROUND OF THE INVENTION

This invention relates to livestock beds with air chambers, see e.g. WO 2012/103645 A1.

Domestic livestock such as cows, horses, swine and others are often housed in barns subdivided into individual stalls. The stall boundaries are defined by walls, curbs, rails, or other dividers, and the flooring is typically concrete or packed soil. Freestalls are common in the dairy industry to allow cows to move about freely and rest when they choose. Rest is important for animal health and with cows, in particular, extended rest is known to improve milk yields.

Comfortable and hygienic bedding encourages the animals to rest and results in increased milk production, preventing swollen hocks, increasing lying times, and lowering somatic cell counts, which reduces mastitis infections in dairy producing animals. Improved freestall animal bedding materials, mattresses, top dressings, and maintenance have been the subject of considerable industry efforts.

Various types of beds and bedding materials have been used, including: straw, dried manure, sand, ground rubber, rubber mats, water beds, and air beds. Straw, dried manure, and sand, for example, provide comfort, but also require large quantities of material and frequent replacement to maintain hygienic conditions.

Ground rubber provides a slight improvement in comfort, but it is best contained in a fabric sack or other containment device to form a mattress, so that it doesn't scatter throughout the barn as animals move about.

Water beds have also been used, but water chambers within the beds must be small enough so that livestock do not trip or stumble as they enter and egress the stall. Further, some water bed designs fail to retain enough water under cow pressure points and water flows to bedding areas where they are not useful. Water beds are also heavy when filled, require a water filling system that includes pumps, hydraulic valves, pipes, and other components that are relatively expensive to manufacture, install, and maintain, particularly since water leakage into freestall areas can cause damage and unhygienic conditions by spreading bedding topping materials, manure, and other contaminants.

Air beds are lighter than water beds and use inflation systems that are relatively less expensive than water beds, but prior air beds suffer from a number of issues. For example, some air beds have internal air chambers that inadequately retain air under animal pressure points, thus defeating the point of the bed. It is also difficult to inflate and maintain an air pressure in a large number of beds. Air beds also require filling with air or other gas, so air delivery systems can be difficult to install, use, and maintain.

Air beds are also susceptible to deformation and shifting as animals enter and exit the freestall and walk on the air bed. Additionally, when animals walk on air beds and lie down, their heavy weight tends to cause the outer portions of the air bed to rise up. When this happens, top dressings, manure, and other contaminants that were on top of the bed can migrate under the bed causing untidy and unsanitary conditions resulting in additional maintenance efforts and costs.

To restrain the air bed in place, it is possible to anchor it down, but the extreme forces that result from a cow walking on a bed, for example, are enough to pull anchors from concrete embedments and pull anchors through the air bed material. Even manufacturing air beds provides challenges because two sheets of heavy duty rubber or other impermeable material must be joined together to define air chambers. Such heavy materials are difficult to join precisely and reliably.

Finally, air chambers in air beds are subject to extreme air pressures when animals are present. Retaining air in the chambers is difficult, and valves and seals must withstand abuse from animals walking, sleeping, and chewing on the air beds.

Thus, there is a need for improved animal bedding systems that provide animal comfort at reasonable manufacturing, installation, and maintenance costs.

### SUMMARY OF THE INVENTION

To overcome the above shortcomings in livestock bed technology, there is provided in accordance with the present invention (see claim 1) a livestock air bed system having a livestock air bed that includes; a bottom sheet made of a substantially impervious material; and a top sheet made of a substantially impervious material and joined to the bottom sheet to define a plurality of air chambers, each air chamber defining a central portion having a first cross-sectional dimension and an end portion having a second cross-sectional dimension that is smaller than the first cross-sectional dimension. The livestock air bed system bed can have a central portion and spaced apart ends, with the air chambers extending between the spaced apart ends.

Each of the plurality of air chambers is substantially chevron-shaped in plan view, and the chevron end portions can be spaced apart from edges of the livestock air bed. Also, each of the plurality of air chambers is spaced apart from the others to define valleys therebetween that drain waste and/or retain a top dressing on the air bed. Chevron-shaped air chambers minimize the load of air pressure to the edges of the air bed, and can also provide a rough correspondence with the shape of an animal when it is resting on the air bed. The air bed can be formed from long sheets of mattress material so that a single bed can serve a number of animals in adjacent stalls. This feature saves manufacturing costs, installation time, and reduces the number of anchoring systems needed to anchor the air bed.

The livestock air bed system can also include an air chamber having a substantially different shape than the other air chambers. For example, air chambers can be formed on the sides of the stall to limit movement of a top dressing between stalls. Another air chamber can be formed at the head of the stall to limit animal movement.

The livestock air bed can include an air inlet in fluid communication with at least one of the air chambers or a plurality of air inlets, and each air inlet is in fluid communication with a corresponding air chamber.

The livestock air bed air chambers can be in fluid communication with each other or they can be isolated from one another.

The livestock air bed can also include a bed inflation system in fluid communication with at least one of the air chambers, with the bed inflation system comprising: a compressor; a trunk link in fluid communication with the compressor; and a plurality of outlets and each outlet is in fluid communication with a corresponding air chamber.

The livestock air bed system can also include a livestock air bed anchor system having a bottom plate corresponding to an edge portion of the bottom sheet of the livestock air bed; a top plate corresponding to an edge portion of the top sheet of the livestock air bed, and the top plate is substantially aligned with the bottom plate to sandwich the bottom sheet edge portion and the top sheet edge portion therebetween; a fastener to join the bottom plate and the top plate; and a floor anchor extending through the top plate and the bottom plate. The top plate and the bottom plate of the anchor system can each include fabric-engaging ribs to improve grip on the livestock air bed. The anchor bottom plate and the top plate can each define anchor holes; and the anchor can further include an anchor member extending through at least one of the anchor holes. The anchor system is preferably used at the ends of a long air bed made of sheets of material as long as 100 feet (30 m) and serving twenty-five stalls. No intermediate anchors are necessary, but they can be used if desired.

The livestock air bed system can also include an air chamber sealing system, which can include a pair of opposing plates on opposite sides of an air inlet to the air chamber and bolted together to close the inlet. The inlet can include a tube and/or valve that is closed when the plates are bolted together.

An embodiment can also include a livestock air bed system including a livestock air bed having: a first bottom sheet made of a substantially fluid impervious material; a top sheet made of a substantially fluid impervious material and joined to the bottom sheet to define a plurality of air chambers, each air chamber defining a central portion having a first cross-sectional dimension and an end portion having a second cross-sectional dimension that is smaller than the first cross-sectional dimension; a bed inflation system; an air chamber sealing system; and an anchoring system. This combination of features results in an efficient bedding system for livestock that is relatively inexpensive to manufacture and maintain while providing animal comfort.

### BRIEF DESCRIPTION OF THE DRAWINGS

Fig. 1A is a perspective view of an air bed and air inflation system in accordance with the present invention;
Fig. 1B is a partial plan view of the livestock air bed system of Fig. 1A;
Fig. 1C is a partial cross-section view of the livestock air bed system of Fig. 1A;
Fig. 2 is a plan view of the livestock air bed of Fig. 1;
Fig. 3 is a cross-sectional view of the livestock air bed of Fig. 2, taken along line 3-3 in Fig. 2;
Fig. 4 is a cross-sectional view of the livestock air bed of Fig. 2, taken along line 4-4 in Fig. 2;
Fig. 5 is a schematic view of an air inflation system for filling air chambers in a livestock air bed;
Fig. 6 is a perspective view of an air inlet sealing system for use in the present invention;
Fig. 7 is a side view of an air chamber inlet sealing system in accordance with the present invention; and
Fig. 8 is a side view of an air chamber inlet sealing system in accordance with the present invention;
Fig. 9 is a perspective view of a livestock air chamber inlet sealing system in accordance with the present invention;
Fig. 10 is a detailed view of the livestock bed chamber inlet sealing system of Figs. 8 and 9;
Fig. 11 is a detailed view of the livestock bed chamber inlet sealing system of Figs. 8 and 9;
Fig. 12 is an exploded view of a livestock air bed anchoring system in accordance with the present invention; and

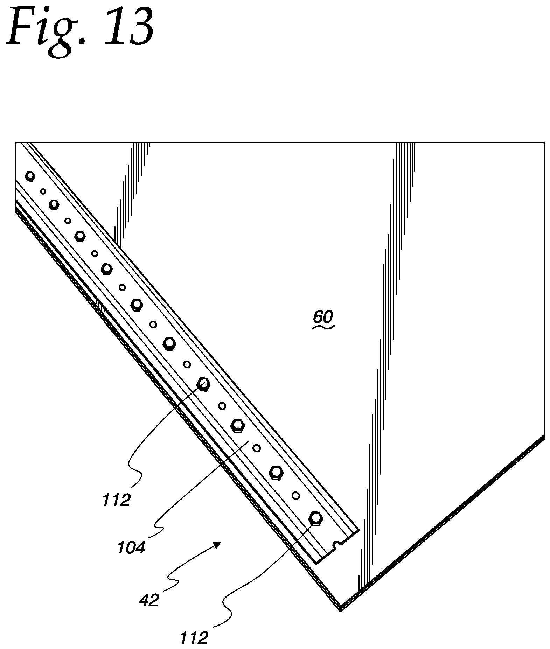

Fig. 13 is a perspective view of the livestock air bed anchoring system.

### DETAILED DESCRIPTION OF THE DRAWINGS

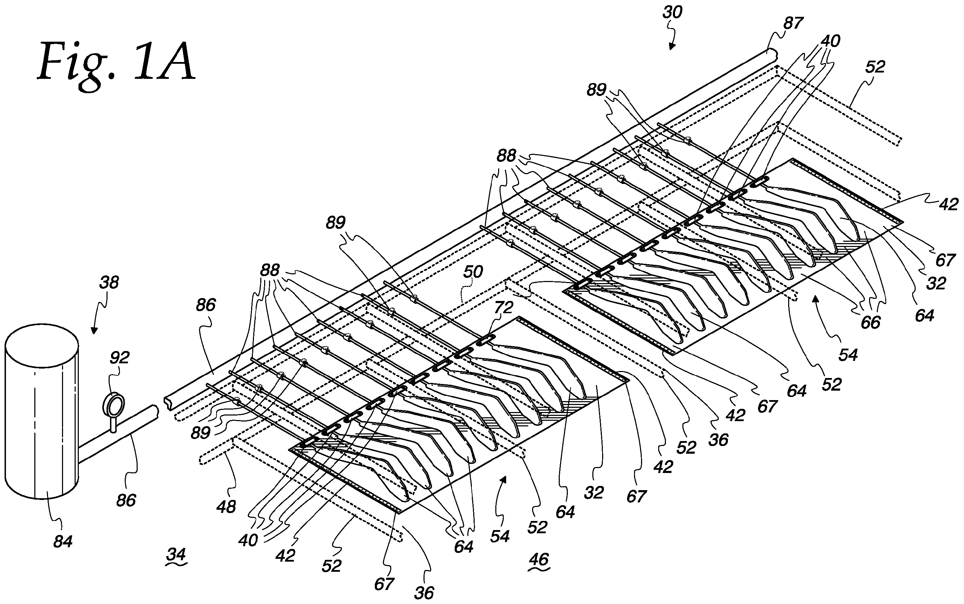

In the following detailed description of drawings, the same reference numeral will be used for the same or similar elements in each of the figures. Illustrated generally in Figs 1A to 1C is a livestock bedding system 30 in accordance with the present invention including a livestock air bed 32 disposed in a dairy barn 34 freestall 36, a bed inflation system 38, an air chamber sealing system 40, and an anchoring system 42.

A dairy barn 34 is illustrated as a suitable location for the livestock bedding system 30, but any type of livestock housing unit may be used. Likewise, a dairy barn freestall 36 is illustrated, but any type of stall, enclosure, or open space is appropriate for use with the present invention. The illustrated dairy barn 34 preferably has a concrete floor 46, but other flooring materials can be used. Further, curbs 48 or walls can also be used to contain bedding and debris.

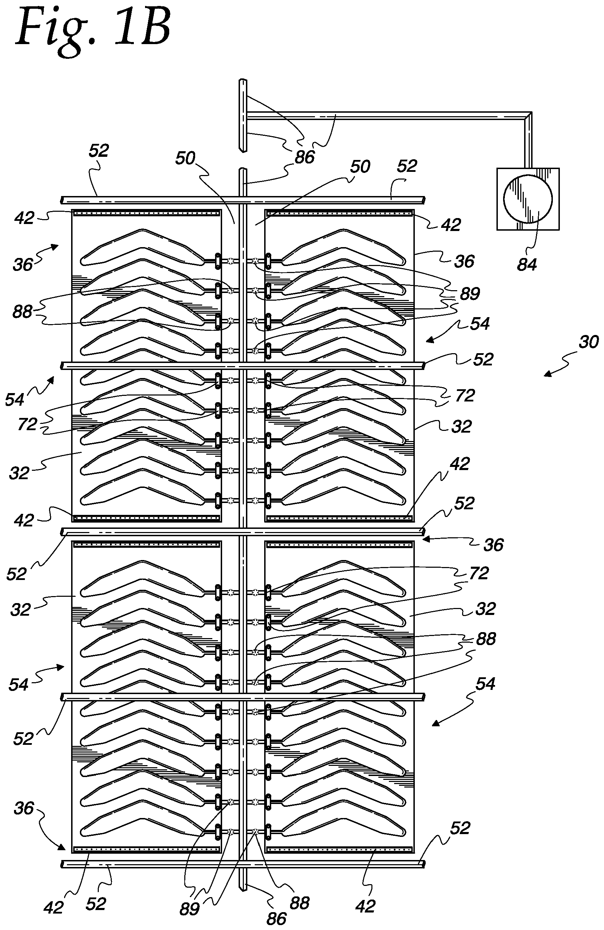

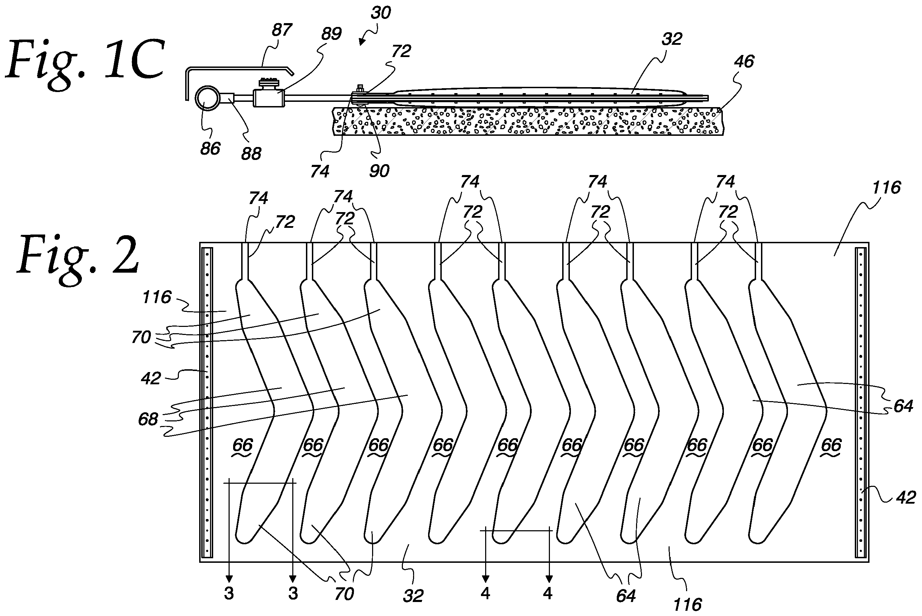

The freestall 36 itself is a substantially rectangular area defined on three sides by barriers including a head rail 50 and side rails 52 that are preferably suspended above the floor 46 for ease of cleaning and maintenance. An entrance 54 is provided that is simply an opening in the stall 36 and it may or may not have a gate. A number of freestalls 36 can be arranged side-by-side and head-to-head or in any other desirable arrangement. As will be explained in more detail below, the bed inflation system 38 and the air chamber sealing system 40 are preferably arranged near the head rail 50 to provide a centralized and efficient support system for the livestock air beds 32. A suitable protecting guard or shield 87, as shown in Fig. 1, can be used to protect the bed inflation system 38.

The livestock air bed 32 is illustrated in Figs. 2 through 4 and includes a bottom sheet 58 and a top sheet 60 that are joined together in selected areas to define a number of air chambers 64. The bottom sheet 58 and the top sheet 60 are illustrated as two separate sheets for ease of reference, but they can be made of a single sheet of material folded over along one edge or they can be made of a tube of material that is simply folded flat. The bottom sheet 58 and the top sheet 60 are made of a relatively gas impermeable material such as rubber, plastic, steel or fiber reinforced rubber, or other suitable materials, but it should be understood that no practical material for use in a livestock bed will be entirely gas impermeable, so the material described herein is considered "substantially impermeable." Preferably, the sheets 58 and 60 are each made of a mixture of natural rubber, butadiene-styrene and recycled rubber from automobile tires, for example. The sheets 58 and 60 are preferably about four mils [.1016 mm] thick for a total bed thickness of eight mils [.2032 mm], and are heat and pressure bonded together. Other thicknesses and bonding methods can be used.

There are various embodiments of livestock air bed 32 sizes depicted in the drawings, but it is preferable that a livestock air bed 32 in accordance with the present invention be about 100 feet [30 m] long and serve about twenty-five stalls 36. It is preferred that each stall 36 will have about three to four air chambers 64 (described below) in each stall 36. This feature saves manufacturing costs, installation time, and reduces the number of anchoring systems needed to anchor the air bed. The anchor system is preferably used at the ends of a long air bed made of sheets of material as long as 100 feet [30 m] and serving twenty-five stalls. No intermediate anchors are necessary, but they can be used if desired.

Obviously, the livestock air bed 32 will be subjected to constant wear and tear from livestock walking, kicking, chewing, and defecating on it. In addition, dirt from the animals, as well as animal treatment and cleaning chemicals can contact the livestock air bed 32, so the materials used for the bottom sheet 58 and the top sheet 60 must be resistant to many different types of wear and chemicals.

The bottom sheet 58 of the livestock air bed 32 typically rests on whatever flooring material is present. In the illustrated embodiment, the bottom sheet 58 rests directly on the concrete floor 46, but padding, protective sheets, or replaceable dressing materials such as straw, hay, dried manure, sand, soil, and other materials could be used under the livestock air bed 32.

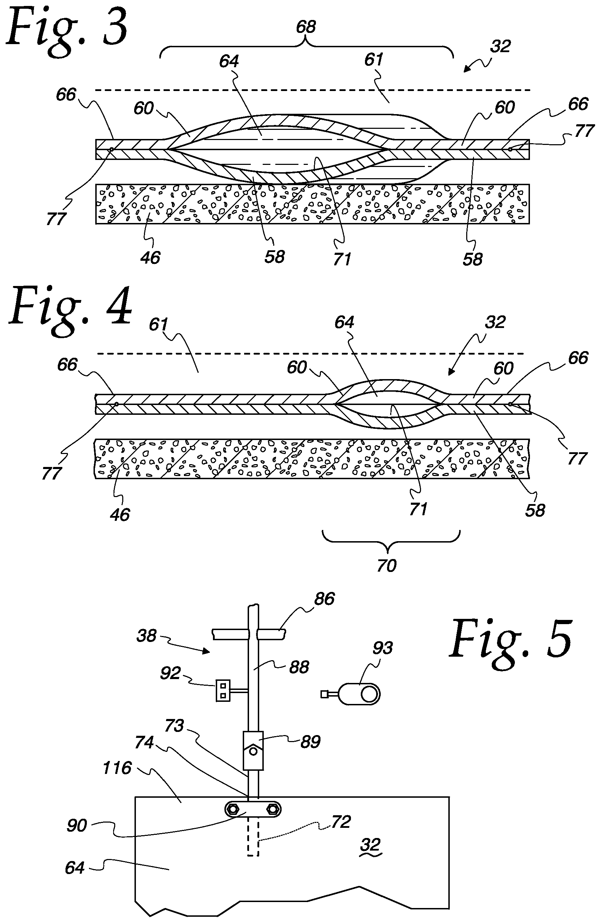

The top sheet 60 can be exposed for direct contact by an animal, but it is preferred that a dressing material (Figs. 3 and 4) such as straw, hay, sand, dried manure, ground rubber, or other suitable material be used on top of the livestock air bed 32 for sanitary and comfort reasons. A dressing material 61 also protects the top sheet 60 from wear.

To place, dress, and remove a top dressing material, shovels, rakes, brooms, and even automated equipment could be used. Thus, the top sheet 60 will be subjected to these additional abrasions and stresses as well. Consequently, it might be determined that the bottom sheet 58 and the top sheet 60 should be made of different materials to accommodate various conditions at an efficient cost.

In addition to supporting a top dressing of bedding material, the top sheet 60 is preferably shaped to retain dressing material on top of the livestock air bed 32 without excessive shifting and movement of the dressing material around the livestock air bed 32 or even to spill off the sides of the livestock air bed 32.

The livestock air bed 32 can also include additional sheets of material as replaceable wear covers, for example. Intermediate sheets of material between the bottom sheet 58 and the top sheet 60 can be used to provide cushioning, spacing, reinforcement, rigidity, or for any other desired purpose. Other types of reinforcing 77, such as wires, bars, grommets, and similar items made of metal, plastic, fibers or other suitable materials can be sandwiched between sheets of material to provide anchoring points, rigidity, and strength, for example.

In the illustrated embodiment, the bottom sheet 58 and the top sheet 60 are joined together to form air chambers 64 that are each preferably and generally in the shape of a chevron in plan view (as seen in Fig. 2, for example) that extends between the head rail 50 to the entrance 54. The chevron-shaped air chambers 64 each preferably vary in cross-sectional area from a central portion 68 to the end portions 70 of the chevron, the purpose of which is explained in detail below.

In between the air chambers 64 are flat areas 66 that define valleys or recesses in which the top dressing 61 can be added. The valleys 66 help debris and manure drain from the livestock air bed 32 and, yet contain dressing materials, which are typically dry. In addition to the air chambers 64 used for cushioning under the animals additional chambers 67 (Fig. 1A) can be formed around the edges of the bed 32 to define curbs for containing a top dressing, for example. Another type of additional air chamber can be in the form of a head tube that can be formed in a longitudinal edge of the sheets 58 and 60, and folded up onto the livestock air bed 32, if desired.

As seen in Figs. 2 and 6 to 11, for example, the air chambers 64 include an air supply inlet 72 that can include a threaded or quick-connect nipple 74 through which air or other gas can be pumped to fill the air chambers 64. The air supply inlets 72 are preferably in the end portions 70 of the air chambers 64, but they could be located at any portion that is convenient.

It is preferred, but not necessary, to have a separate inlet 72 for each air chamber 64, but it is possible to have one inlet 72 serve more than one air chamber 64, by forming an air duct (not illustrated) between air chambers 64. Given the weight of a dairy animal, for example, the chosen arrangement of air chambers 64, inlets 72, and air ducts must take into consideration a variety of factors including: inflation time, cost, weight of the animal to ensure even weight/load distribution when the animal enters, egresses, lies down, and other factors. Also, if desired, the air chambers 64 and/or air ducts can include baffles, one-way valves, porous material such as foam, for example, to control air movement, limit air loss in the event of a leak, or even a cushion in the event air pressure in the air chamber 64 is insufficient to support the animal.

The chevron-shaped air chambers 64 are preferred because they provide adequate stepping locations on the flat areas 66 and cover a sufficient amount of area to provide animal comfort while the animal is lying down and resting. In some instances, the chevron-shaped air chambers 64 roughly match the animal's shape when it is in the livestock air bed 32. Also, due to the very heavy weight of livestock using the livestock air beds 32, pressure on one or more air chambers 64 can cause the livestock air bed 32 to bend, curl, fold, or take other shapes that can trip an animal or cause the livestock air bed 32 to shift. In addition, any dressing material used on top of the livestock air bed 32 will be redistributed and can even work its way under the livestock air bed 32 causing an undesirable, non-uniform surface underneath. The chevron-shaped air chambers 64 with alternating valleys 66 minimize adverse impacts from animal movement and weight. Regardless of shape when viewed in a plan view, the difference in cross-sectional area from a larger area in the central portion to a smaller area in the end portions of the air chamber is important.

Another way to address bending and curling of the livestock air bed 32 is to anchor the livestock air bed 32 to the floor 46, surrounding curbs 48, or rails 50/52 using the anchoring system 42. As explained in more detail below, the forces that must be restrained by the anchoring system 42 are extreme and can cause failure of the livestock air bed 32, the anchoring system 42, or whatever stall structure to which the anchoring system 42 is joined.

Further limiting deformation forces in the present invention is the internal shape of the air chambers 64, themselves. The central portion 68 of the air chambers 64 has a relatively large cross-sectional area while the end portions 70 have a relatively small cross-sectional area. (See Figs. 3 and 4, respectively.) One example of a suitable air chamber 64 arrangement is a chamber spacing of about fourteen inches [36 cm] apart with about a six inch [15 cm] diameter chamber in the central portion 68 and about a two inch [5 cm] diameter chamber in the smallest parts of the end portions 70. It is preferred to have at least four inches [10 cm] of space between each chevron for cows, but other spacings are possible. This internal air chamber geometry limits the amount of deformation air pressure that reaches the ends of the livestock air bed 32, and consequently limits the loads that curls the livestock air bed 32 and that must be restrained by the anchoring system 42. This differential cross-sectional area geometry is useful regardless of the shape of the air chamber in plan view.

Further, Figs. 1A through 2 illustrate the air chambers 64 as all being substantially the same size and shape, but the sizes and shapes can vary. For example, all of the chambers 64 can be chevron-shaped, but those nearer edges can be smaller in cross-sectional dimensions. Alternately, the chambers 64 can be chevron-shaped in the central part of the livestock air bed 32, but other shapes near the edges, or vice versa.

It is preferred to have a generally gradual taper between the cross-sectional areas of the air chamber central portion 68 and the end portion 70, as illustrated, but the change can be abrupt, or include a number of steps that extend between the central portion 68 and the end portions 70. There is no specific beginning and end to the central portion 68 and the end portions 70, but they are preferably sized to provide a balance between limiting deformation loads on the livestock air bed 32 and animal comfort.

The bottom sheet 58 and the top sheet 60 are joined together in any suitable manner including: heat fusing, pressure fusing, adhesives, mechanical fasteners, and combinations of these. When fusing, it is preferred to apply a release material 71 such as a plastic sheet, release chemicals or other heat resistant material to the areas that will become air chambers 64 on one of the sheets. The release material 71 is applied in the desired shape of the air chambers 64 so the fusing process does not fuse the sheets in locations where release material 71 is applied. The other sheet is then mated to the first and heat and/or pressure are used to join the sheets together. The release material 71 remains in the air chamber 64 and causes no adverse effects.

If intermediate sheets, borders, reinforcing materials, or other devices are to be used, they would be placed between the sheets prior to the joining process. In addition, any mechanical devices added to the livestock air bed 32 can be joined using a mechanical or chemical connection, whichever is appropriate for the device.

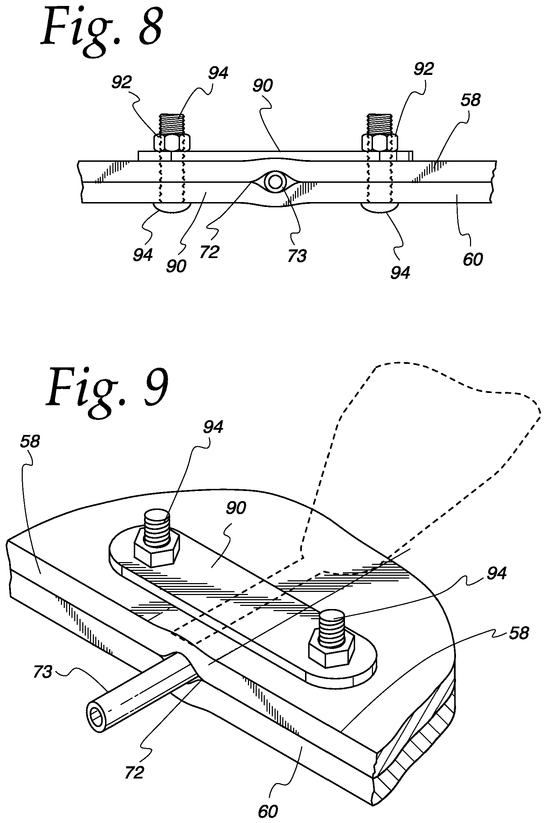

As illustrated in Figs. 5 to 11, the inlet 72 is preferably formed between the sheets 58 and 60, and in the same operation as the joining of the bottom sheet 58 and the top sheet 60, but the inlet 72 can be created in any suitable manner including drilling or otherwise piercing of the sheets 58, 60 or the seam between the two. The inlet 72 can be a simple space or gap between the sheets or it can include a piece of tubing 73, for example. (See Figs. 8 to 11, for example.)

The inlet 72 can be fitted with a suitable valve that can be a one-way valve with a springloaded and normally-closed position or it could be any other suitable valve. Also, the inlet 72 can be reinforced in any suitable manner that minimizes inadvertent collapsing of the inlet 72 or damage to the inlet 72 or valve by animals or workers. The inlet 72 can also extend outward from the livestock air bed 32 in the form of a hose or tube 73, for example, for ease of connecting to the bed inflation system 38. (See Fig. 9, for example.)

The inlet 72 is preferably aligned with other inlets 72 (see Fig. 1B) on other air chambers 64 in the same livestock air bed 32 and with the inlets 72 of other livestock air beds 32 in nearby stalls 36, so that the bed inflation system 38 can be used to inflate and maintain inflation of multiple livestock air beds 32 simultaneously or at least as conveniently as possible.

As seen in Figs. 1A to 1C, the bed inflation system 38 preferably includes a compressor 84, a trunk line 86 connected to the compressor 84, and a number of outlets 88 in the trunk line 86 to align with and connect to the inlets 72 on the livestock air beds 32. The compressor can be of any suitable size and type sufficient to provide adequate air pressure and volume to fill the livestock air beds 32 and maintain air pressure in the air chambers 64. The trunk line 86 can include pipes, hoses, or any other suitable type of chamber through which air can flow from the compressor 84 to the livestock air bed 32. Preferably, the trunk line 86 can be made of air tubing or hose, copper or even a pressure rated PVC pipe.

The outlets 88 can be mounted on the trunk line 86 in any suitable manner and can be rigid or flexible to accommodate the spacing and flexibility of the corresponding inlets 72 on the livestock air bed 32.

As depicted in Fig. 5, the bed inflation system 38 can include suitable check valves 89 and regulators 92, including hand-held digital gauges 93 or permanent in-line pressure gauges. The air pressure provided to the bed air chambers 64 is preferably about 2.5 to 3.5 psi [17.2 to 24.1 kPa], but air pressure can vary depending on the distance to the compressor 84, for example, so trunk line size and valve arrangements can be used to equalize pressure along the length of the trunk line 86.

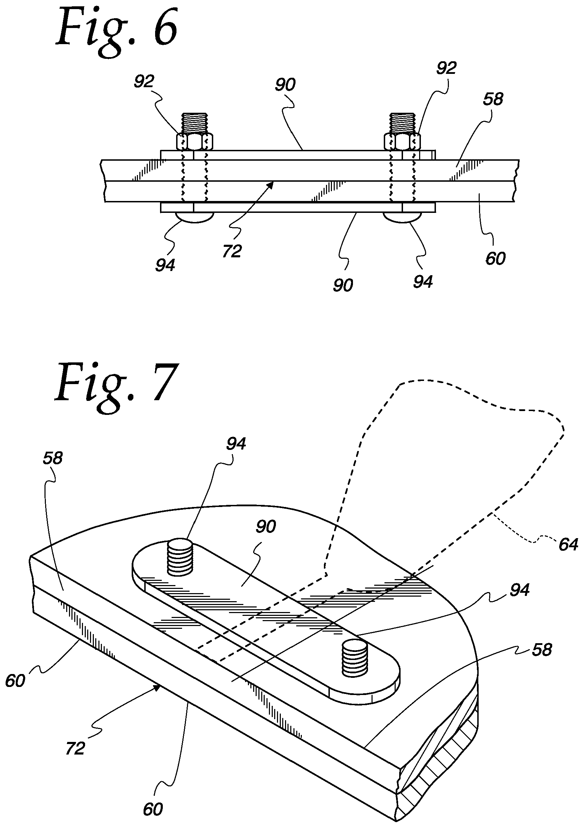

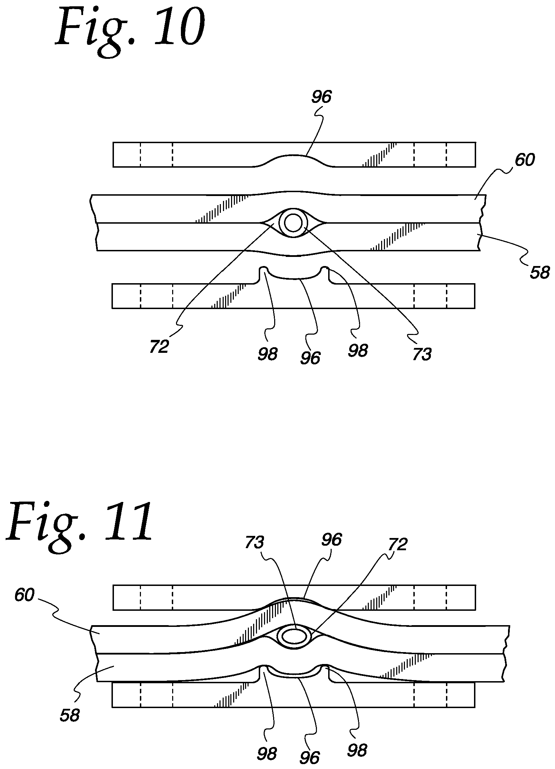

Once the livestock air bed 32 is filled with air, the inlets 72 are preferably sealed using the air chamber sealing system 38, as seen in Figs. 6 through 11, which preferably includes in one embodiment a pair of opposing plates 90 on opposite sides of the inlet 72 and bolted together with nuts 92 and bolts 94. If the inlet is formed by or otherwise includes a tube 78, as illustrated in the embodiment of Figs. 8 to 11, the clamping pressure of joining the two plates 90 compresses the tube 78 to seal the air inlet 72. Preferably, the tube 78 is resilient enough to reopen when the clamping pressure is released, as in Figs. 10 and 11.

Although illustrated as nuts 92 and bolts 94, the plates 90 could be joined in any suitable manner including a cam-action pivoting handle or other suitable device. A sealing adhesive may also be used around the tube 73 to further prevent air leakage. Further, the plates 90 can be shaped with mating recesses 96 and protrusions 98 and/or ribs 99, as illustrated in Figs. 10 and 11. Preferably, the protrusions 98 span the width of the inlet tube 73 to prevent crushing and maintain the tube's 73 resiliency, so that it reopens when the clamping force is released.

As stated above, the weight of an animal compressing air in the air chambers 64 of the livestock air bed 32 causes extreme deformation loads on the livestock air bed 32. To prevent tripping of the animals, shifting of the livestock air bed 32, and dressing material 61 from moving under the livestock air bed 32, it is desirable to anchor the livestock air bed to the floor 46 or other surrounding stall structures. In the case of the livestock air bed 32 being used by cows, for example, the deformation loads on the edges of the livestock air bed 32 can easily cause many different types of anchoring systems to fail. Thus, in accordance with the present invention, an anchoring system 42 is provided to anchor the livestock air bed 32 safely and without damage to the livestock air bed 32, the floor 46, or any of the surrounding stall 36 structure.

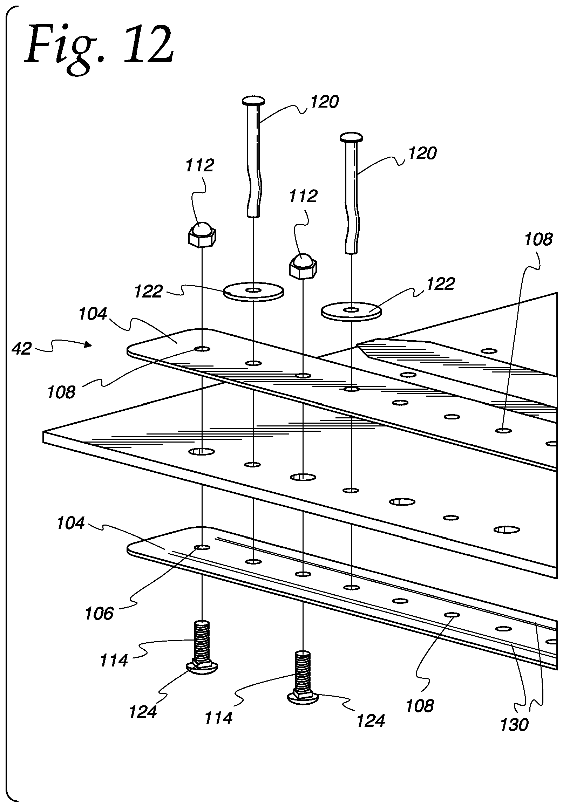

The anchoring system 42 illustrated in Fig. 12 includes a pair of plates 104 with aligning holes 106 in the plates 104 and holes 108, in the livestock air bed 32. Nuts 112, bolts 114, and washers can be used. Anchoring pins 120 are then inserted through the washers 122, some of the holes 106 and 108, and driven into the concrete floor 46. Any suitable type of concrete anchoring pin 120 can be used. The plates 104 provide adequate load distribution to prevent damage to the livestock air bed 32 or the floor 46.

Preferably, the plates 90 and 104 are made of stainless steel, hot-dipped galvanized ductile iron or any other suitable material for the environment in which the livestock air bed 32 is located. In addition, the plates 90 and 104 can be reversed from the arrangement depicted with the top plate and bottom plate flipped. Finally, it is preferred that the plates 90 and 104 have recesses into which bolt heads and nuts can fit for safety. This arrangement also can result in being able to use only one tool to tighten or loosen a connector.

The bolts 114 are preferably carriage bolts and the holes 106 in at least one of the plates 104 are square to receive mating square shoulders 124 on the carriage bolts 114, so that only one wrench is needed to secure the anchoring system plates 104. Preferably, the nuts 112 are cap nuts, as illustrated, to cover the ends of the bolts 114, for safety reasons. Other types of connectors can be used as well. Preferably, the fasteners described herein are made of stainless steel, galvanized steel, or other material appropriate for the location and loads.

The plates 104 can also include mating recesses and protrusions to secure the plates 104 to edge portions 116 of the livestock air bed 32. The recesses and protrusions compress the edge portions of the sheets 58 and 60 to prevent them from being pulled from the anchoring system 42. Preferably, the protrusion is in the form of one or more longitudinal ribs 130, preferably in aligned pairs, as depicted in Fig. 12, that distribute clamping loads evenly.

The foregoing detailed description of the drawings is provided for a better understanding of the present invention. Nothing therein is intended to unduly limit the scope of the following claims and no unnecessary limitations should be read into the following claims.

## Claims

1. A livestock air bed system (30) comprising:
a livestock air bed (32) having:
a bottom sheet (58) made of a substantially impervious material; and a top sheet (60) made of a substantially impervious material and joined to the bottom sheet (58) to define a plurality of air chambers (64) and each air chamber (64) defines a central portion (68) having a first cross-sectional dimension and an end portion (70) having a second cross-sectional dimension that is smaller than the first cross-sectional dimension, each air chamber (64) is substantially chevron-shaped in plan view and each of the plurality of air chambers (64) is spaced apart from the others to define valleys (66) there between retain a replaceable top dressing material (61).

2. The livestock air bed system of claim 1, wherein the bed has a central portion and spaced apart ends, and the air chambers (64) extend between the spaced apart ends.

3. The livestock air bed system of claim 1, wherein each air chamber (64) end portion is spaced apart from edges of the livestock air bed.

4. The livestock air bed system of claim 1, wherein
the air chambers (64) are spaced apart to define valleys (66) therebetween.

5. The livestock air bed system of claim 1, and further comprising:
a second air chamber having a substantially different shape than the plurality of air chambers (64).

6. The livestock air bed system of claim 1, and further comprising:
a plurality of air inlets (72), and each air inlet (72) is in fluid communication with a corresponding air chamber (64).

7. The livestock air bed system of claim 1, and further comprising:
an air chamber sealing system (40) having:
a pair of opposing plates (104) disposed on opposite sides of an air inlet (72) to the air chamber (64) and releasably joined together to selectively open and close the inlet (72).

8. The livestock air bed system of claim 1, and further comprising:
a bed inflation system (38) in fluid communication with each of the air chambers (64).

9. The livestock air bed system of claim 1, and further comprising:
a bed inflation system (38) comprising:
a compressor (84);
a trunk line (86) in fluid communication with the compressor (84); and
an outlet (88) in fluid communication with each of the air chambers (64).

10. The livestock air bed system of claim 1, and further comprising:
a livestock air bed anchor system (42), comprising:
a bottom plate corresponding to an edge portion of the bottom sheet of the livestock air bed;
a top plate corresponding to an edge portion of the top sheet of the livestock air bed, and the top plate is substantially aligned with the bottom plate to compress the bottom sheet edge portion and the top sheet edge portion therebetween;
a fastener joining the bottom plate and the top plate; and
a floor anchor extending through the top plate and the bottom plate.

11. The livestock air bed system of claim 13, wherein the top plate and the bottom plate each comprise:
fabric-engaging ribs.

12. The livestock air bed system of claim 10, wherein the bottom plate includes a bottom rib (130) for engaging the bottom sheet of the livestock air bed, and the top plate includes a top rib for engaging the top sheet of the livestock air bed; and the bottom rib and the top rib are substantially aligned with one another.

13. The livestock air bed system of claim 10, wherein the anchor bottom plate and the top plate each define anchor holes (106, 108); and the anchor further comprises: a ground anchor member (120) extending through at least one of the anchor holes (106, 108).

14. A livestock air bed system of claim 1 and further comprising:
a bed inflation system (38);
an air chamber sealing system (40); and
an anchoring system (42).

15. The livestock air bed system of claim 14, wherein the bed has a central portion (68) and spaced apart ends, and the air chambers extend (64) between the spaced apart ends.

16. The livestock air bed system of claim 14, wherein each air chamber (64) end portion is spaced apart from edges of the livestock air bed.

17. The livestock air bed system of claim 14, and further comprising:
a second air chamber shape spaced apart from the plurality of air chambers (64) to define a valley therebetween.

18. The livestock air bed system of claim 14, and further comprising:
an additional air chamber having a substantially different shape than the plurality of air chambers (64).

19. The livestock air bed system of claim 17, and further comprising:
a plurality of air inlets (72), and each air inlet (72) is in fluid communication with a corresponding air chamber (64).

20. The livestock air bed system of claim 14,wherein:
the air chamber sealing system (40) comprises:
a pair of opposing plates (58, 60) disposed on opposite sides of an air inlet (72) to the air chamber (64) and releasably joined together to selectively open and close the inlet (72).

21. The livestock air bed system of claim 14, wherein:
the bed inflation system is in fluid communication with the plurality of air chambers.

22. The livestock air bed system of claim 14,wherein:
the bed inflation system (38)comprises:
a compressor (84);
a trunk line (86) in fluid communication with the compressor (84); and
an outlet in fluid communication with the plurality of air chambers (64).

23. The livestock air bed system of claim 14,wherein:
the livestock air bed anchor system (42), comprises:
a bottom plate corresponding to an edge portion of the bottom sheet of the livestock air bed;
a top plate corresponding to an edge portion of the top sheet of the livestock air bed, and the top plate is substantially aligned with the bottom plate to compress the bottom sheet edge portion and the top sheet edge portion therebetween;
a fastener joining the bottom plate and the top plate; and
a floor anchor extending through the top plate and the bottom plate.

24. The livestock air bed system of claim 23, wherein the top plate and the bottom plate each comprise:
fabric-engaging ribs.

25. The livestock air bed system of claim23, wherein the bottom plate includes a bottom rib (130) for engaging the bottom sheet of the livestock air bed, and the top plate includes a top rib for engaging the top sheet of the livestock air bed; and the bottom rib and the top rib are substantially aligned with one another.

26. The livestock air bed system of claim 23, wherein the anchor bottom plate and the top plate each define anchor holes 106, 108); and the anchor further comprises: a ground anchor member (120) extending through at least one of the anchor holes.

27. The livestock air bed system of claim 14, wherein the livestock air bed extends between a plurality of animal stalls.

28. The livestock air bed system of claim 14, wherein the livestock air bed extends between a plurality of stalls, and is anchored at its ends by the anchoring system.

## Patentansprüche

1. Viehluftbettsystem (30), das Folgendes aufweist:
ein Viehluftbett (32) mit:
einer Bodenlage (58), die aus einem im Wesentlichen undurchlässigen Material hergestellt ist, und einer Decklage (60), die aus einem im Wesentlichen undurchlässigen Material hergestellt und mit der Bodenlage (58) verbunden ist, um mehrere Luftkammern (64) zu definieren, und jede Luftkammer (64) definiert einen zentralen Abschnitt (68), der eine erste Querschnittsabmessung hat, und einen Endabschnitt (70), der eine zweite Querschnittsabmessung hat, die kleiner ist als die erste Querschnittsabmessung, wobei jede Luftkammer (64) im Wesentlichen in einer Draufsicht zickzackförmig ist und jede der mehreren Luftkammern (64) von den anderen beabstandet ist, um Senken (66) dazwischen zu definieren, um ein austauschbares oberes Abdeckungsmaterial (61) zu halten.

2. Viehluftbettsystem nach Anspruch 1, wobei das Bett einen zentralen Abschnitt und voneinander beabstandete Enden hat und sich die Luftkammern (64) zwischen den voneinander beabstandeten Enden erstrecken.

3. Viehluftbettsystem nach Anspruch 1, wobei jeder Endabschnitt der Luftkammern (64) von Rändern des Viehluftbetts beabstandet ist.

4. Viehluftbettsystem nach Anspruch 1, wobei
die Luftkammern (64) voneinander beabstandet sind, um Senken (66) dazwischen zu definieren.

5. Viehluftbettsystem nach Anspruch 1, das ferner Folgendes aufweist:
eine zweite Luftkammer mit einer Form, die sich im Wesentlichen von den mehreren Luftkammern (64) unterscheidet.

6. Viehluftbettsystem nach Anspruch 1, das ferner Folgendes aufweist:
mehrere Lufteinlässe (72), wobei jeder Lufteinlass (72) mit einer entsprechenden Luftkammer (64) in Fluidkommunikation ist.

7. Viehluftbettsystem nach Anspruch 1, das ferner Folgendes aufweist:
ein luftkammerabdichtendes System (40) mit:
einem Paar gegenüberliegender Platten (104), die auf gegenüberliegenden Seiten eines Lufteinlasses (72) zu der Luftkammer (64) angeordnet und miteinander lösbar verbunden sind, um den Einlass (72) selektiv zu öffnen und zu schließen.

8. Viehluftbettsystem nach Anspruch 1, das ferner Folgendes aufweist:
ein Bettaufblassystem (38), das mit jeder der Luftkammern (64) in Fluidkommunikation ist.

9. Viehluftbettsystem nach Anspruch 1, das ferner Folgendes aufweist:
ein Bettaufblassystem (38), das Folgendes aufweist:
einen Verdichter (84),
eine Hauptleitung (86), die mit dem Verdichter (84) in Fluidkommunikation ist, und
einen Auslass (88), der mit jeder der Luftkammern (64) in Fluidkommunikation ist.

10. Viehluftbettsystem nach Anspruch 1, das ferner Folgendes aufweist:
ein Viehluftbett-Verankerungssystem (42), das Folgendes aufweist:
eine Bodenplatte, die einem Randabschnitt der Bodenlage des Viehluftbetts entspricht,
eine Deckplatte, die einem Randabschnitt der Decklage des Viehluftbetts entspricht, wobei die Deckplatte im Wesentlichen mit der Bodenplatte ausgerichtet ist, um den Randabschnitt der Bodenlage und den Randabschnitt der Decklage dazwischen zu komprimieren,
einen Befestiger, der die Bodenplatte mit der Deckplatte verbindet, und
eine Bodenverankerung, die sich durch die Deckplatte und die Bodenplatte erstreckt.

11. Viehluftbettsystem nach Anspruch 13, wobei die Deckplatte und die Bodenplatte jeweils Folgendes aufweisen:
mit Stoff eingreifende Rippen.

12. Viehluftbettsystem nach Anspruch 10, wobei die Bodenplatte eine Bodenrippe (130) zum Eingreifen mit der Bodenlage des Viehluftbetts aufweist und die Deckplatte eine Deckrippe zum Eingreifen mit der Decklage des Viehluftbetts aufweist, und wobei die Bodenrippe und die Deckrippe im Wesentlichen miteinander ausgerichtet sind.

13. Viehluftbettsystem nach Anspruch 10, wobei die Verankerungsbodenplatte und die Deckplatte jeweils Verankerungslöcher (106, 108) definieren und die Verankerung ferner Folgendes aufweist: ein Grundverankerungselement (120), das sich durch mindestens eines der Verankerungslöcher (106, 108) erstreckt.

14. Viehluftbettsystem nach Anspruch 1, das ferner Folgendes aufweist:
ein Bettaufblassystem (38),
ein luftkammerabdichtendes System (40) und
ein Verankerungssystem (42).

15. Viehluftbettsystem nach Anspruch 14, wobei das Bett einen zentralen Abschnitt (68) und voneinander beabstandete Enden hat und sich die Luftkammern (64) zwischen den voneinander beabstandeten Enden erstrecken.

16. Viehluftbettsystem nach Anspruch 14, wobei jeder Endabschnitt der Luftkammern (64) von Rändern des Viehluftbetts beabstandet ist.

17. Viehluftbettsystem nach Anspruch 14, das ferner Folgendes aufweist:
eine zweite Luftkammerform, die von den mehreren Luftkammern (64) beabstandet ist, um eine Senke dazwischen zu definieren.

18. Viehluftbettsystem nach Anspruch 14, das ferner Folgendes aufweist:
eine zusätzliche Luftkammer mit einer Form, die sich im Wesentlichen von den mehreren Luftkammern (64) unterscheidet.

19. Viehluftbettsystem nach Anspruch 17, das ferner Folgendes aufweist:
mehrere Lufteinlässe (72), wobei jeder Lufteinlass (72) mit einer entsprechenden Luftkammer (64) in Fluidkommunikation ist.

20. Viehluftbettsystem nach Anspruch 14, wobei:
das luftkammerabdichtende System (40) Folgendes aufweist:
ein Paar gegenüberliegender Platten (58, 60), die auf gegenüberliegenden Seiten eines Lufteinlasses (72) zu der Luftkammer (64) angeordnet und lösbar miteinander verbunden sind, um den Einlass (72) selektiv zu öffnen und zu schließen.

21. Viehluftbettsystem nach Anspruch 14, wobei:
das Bettaufblassystem mit den mehreren Luftkammern in Fluidkommunikation ist.

22. Viehluftbettsystem nach Anspruch 14, wobei:
das Bettaufblassystem (38) Folgendes aufweist:
einen Verdichter (84),
eine Hauptleitung (86), die mit dem Verdichter (84) in Fluidkommunikation ist, und
einen Auslass, der mit den mehreren Luftkammern (64) in Fluidkommunikation ist.

23. Viehluftbettsystem nach Anspruch 14, wobei:
das Viehluftbett-Verankerungssystem (42) Folgendes aufweist:
eine Bodenplatte, die einem Randabschnitt der Bodenlage des Viehluftbetts entspricht,
eine Deckplatte, die einem Randabschnitt der Decklage des Viehluftbetts entspricht, wobei die Deckplatte im Wesentlichen mit der Bodenplatte ausgerichtet ist, um den Randabschnitt der Bodenlage und den Randabschnitt der Decklage dazwischen zu komprimieren,
einen Befestiger, der die Bodenplatte mit der Deckplatte verbindet, und
eine Bodenverankerung, die sich durch die Deckplatte und die Bodenplatte erstreckt.

24. Viehluftbettsystem nach Anspruch 23, wobei die Deckplatte und die Bodenplatte jeweils Folgendes aufweisen:
mit Stoff eingreifende Rippen.

25. Viehluftbettsystem nach Anspruch 23, wobei die Bodenplatte eine Bodenrippe (130) zum Eingreifen mit der Bodenlage des Viehluftbetts aufweist und die Deckplatte eine Deckrippe zum Eingreifen mit der Decklage des Viehluftbetts aufweist, und wobei die Bodenrippe und die Deckrippe im Wesentlichen miteinander ausgerichtet sind.

26. Viehluftbettsystem nach Anspruch 23, wobei die Verankerungsbodenplatte und die Deckplatte jeweils Verankerungslöcher (106, 108) definieren und die Verankerung ferner Folgendes aufweist: ein Grundverankerungselement (120), das sich durch mindestens eines der Verankerungslöcher erstreckt.

27. Viehluftbettsystem nach Anspruch 14, wobei sich das Viehluftbett zwischen mehreren Tierställen erstreckt.

28. Viehluftbettsystem nach Anspruch 14, wobei sich das Viehluftbett zwischen mehreren Ställen erstreckt und an seinen Enden durch das Verankerungssystem verankert ist.

## Revendications

1. Système de matelas pneumatique (30) pour bétail, comprenant :
un matelas pneumatique pour bétail (32), ayant :
une nappe inférieure (58) fabriquée en un matériau sensiblement imperméable ; et une nappe supérieure (60) fabriquée en un matériau sensiblement imperméable et jointe à la nappe inférieure (58) pour définir une pluralité de chambres à air (64) et chaque chambre à air (64) définissant une partie centrale (68) ayant une première dimension en section transversale et une partie d'extrémité (70) ayant une deuxième dimension en section transversale qui est inférieure à la première dimension en section transversale, chaque chambre à air (64) étant sensiblement en forme de chevron en vue en plan et chacune de la pluralité de chambres à air (64) étant espacée des autres pour définir des vallées (66) entre elles pour retenir une couche de matériau de garnissage remplaçable (61).

2. Système de matelas pneumatique pour bétail selon la revendication 1, dans lequel le matelas présente une partie centrale et des extrémités espacées, et les chambres à air (64) s'étendent entre les extrémités espacées.

3. Système de matelas pneumatique pour bétail selon la revendication 1, dans lequel chaque partie d'extrémité de chambre à air (64) est espacée de bords du matelas pneumatique pour bétail.

4. Système de matelas pneumatique pour bétail selon la revendication 1, dans lequel les chambres à air (64) sont espacées pour définir entre elles des vallées (66).

5. Système de matelas pneumatique pour bétail selon la revendication 1, comprenant en outre :
une deuxième chambre à air ayant une forme sensiblement différente de celle de la pluralité de chambres à air (64).

6. Système de matelas pneumatique pour bétail selon la revendication 1, comprenant en outre :
une pluralité d'entrées d'air (72), chaque entrée d'air (72) étant en communication fluidique avec une chambre à air correspondante (64).

7. Système de matelas pneumatique pour bétail selon la revendication 1, comprenant en outre :
un système d'étanchéification de chambre à air (40) présentant :
une paire de plaques opposées (104) disposées sur des côtés opposés d'une entrée d'air (72) vers la chambre à air (64) et jointes l'une à l'autre de manière amovible pour ouvrir et fermer l'entrée (72) de manière sélective.

8. Système de matelas pneumatique pour bétail selon la revendication 1, comprenant en outre :
un système de gonflage de matelas (38) en communication fluidique avec chacune des chambres à air (64).

9. Système de matelas pneumatique pour bétail selon la revendication 1, comprenant en outre :
un système de gonflage de matelas (38) comprenant
un compresseur (84) ;
une conduite principale (86) en communication fluidique avec le compresseur (84) ; et
une sortie (88) en communication fluidique avec chacune des chambres à air (64).

10. Système de matelas pneumatique pour bétail selon la revendication 1, comprenant en outre :
un système d'ancrage de matelas pneumatique (42) pour bétail, comprenant :
une plaque inférieure correspondant à une partie de bord de la nappe inférieure du matelas pneumatique pour bétail ;
une plaque supérieure correspondant à une partie de bord de la nappe supérieure du matelas pneumatique pour bétail, la plaque supérieure étant sensiblement alignée avec la plaque inférieure pour comprimer la partie de bord de la nappe inférieure et la partie de bord de la nappe supérieure entre elles ;
un dispositif d'attache joignant l'une à l'autre la plaque inférieure et la plaque supérieure ; et
un ancrage au plancher s'étendant à travers la plaque supérieure et la plaque inférieure.

11. Système de matelas pneumatique pour bétail selon la revendication 13, dans lequel la plaque supérieure et la plaque inférieure comprennent chacune :
des nervures d'engagement avec un tissu.

12. Système de matelas pneumatique pour bétail selon la revendication 10, dans lequel la plaque inférieure comporte une nervure inférieure (130) destinée à s'engager avec la nappe inférieure du matelas pneumatique pour bétail, et la plaque supérieure comporte une nervure supérieure destinée à s'engager avec la nappe supérieure du matelas pneumatique pour bétail ; et la nervure inférieure et la nervure supérieure sont sensiblement alignées l'une avec l'autre.

13. Système de matelas pneumatique pour bétail selon la revendication 10, dans lequel la plaque inférieure d'ancrage et la plaque supérieure définissent chacune des trous d'ancrage (106, 108) ; et l'ancrage comprend en outre : un organe d'ancrage au sol (120) s'étendant à travers au moins l'un des trous d'ancrage (106, 108).

14. Système de matelas pneumatique pour bétail selon la revendication 1, comprenant en outre :
un système de gonflage de matelas (38) ;
un système d'étanchéification de chambre à air (40) ; et
un système d'ancrage (42).

15. Système de matelas pneumatique pour bétail selon la revendication 14, dans lequel le matelas présente une partie centrale (68) et des extrémités espacées, et les chambres à air (64) s'étendent entre les extrémités espacées.

16. Système de matelas pneumatique pour bétail selon la revendication 14, dans lequel chaque partie d'extrémité de chambre à air (64) est espacée de bords du matelas pneumatique pour bétail.

17. Système de matelas pneumatique pour bétail selon la revendication 14, comprenant en outre :
une deuxième forme de chambre à air espacée de la pluralité de chambres à air (64) pour définir une vallée entre elles.

18. Système de matelas pneumatique pour bétail selon la revendication 14, comprenant en outre :
une chambre à air supplémentaire ayant une forme sensiblement différente de celle de la pluralité de chambres à air (64).

19. Système de matelas pneumatique pour bétail selon la revendication 17, comprenant en outre :
une pluralité d'entrées d'air (72), chaque entrée d'air (72) étant en communication fluidique avec une chambre à air correspondante (64).

20. Système de matelas pneumatique pour bétail selon la revendication 14, dans lequel :
le système d'étanchéfication de chambre à air (40) comprend :
une paire de plaques opposées (58, 60) disposées sur des côtés opposés d'une entrée d'air (72) vers la chambre à air (64) et jointes l'une à l'autre de manière amovible pour ouvrir et fermer l'entrée (72) de manière sélective.

21. Système de matelas pneumatique pour bétail selon la revendication 14, dans lequel :
le système de gonflage de matelas est en communication fluidique avec la pluralité de chambres à air.

22. Système de matelas pneumatique pour bétail selon la revendication 14, dans lequel :
le système de gonflage de matelas (38) comprend :
un compresseur (84) ;
une conduite principale (86) en communication fluidique avec le compresseur (84) ; et
une sortie en communication fluidique avec la pluralité de chambres à air (64).

23. Système de matelas pneumatique pour bétail selon la revendication 14, dans lequel :
le système d'ancrage de matelas pneumatique (42) pour bétail comprend :
une plaque inférieure correspondant à une partie de bord de la nappe inférieure du matelas pneumatique pour bétail ;
une plaque supérieure correspondant à une partie de bord de la nappe supérieure du matelas pneumatique pour bétail, la plaque supérieure étant sensiblement alignée avec la plaque inférieure pour comprimer la partie de bord de la nappe inférieure et la partie de bord de la nappe supérieure entre elles ;
un dispositif d'attache joignant l'une à l'autre la plaque inférieure et la plaque supérieure ; et
un ancrage au plancher s'étendant à travers la plaque supérieure et la plaque inférieure.

24. Système de matelas pneumatique pour bétail selon la revendication 23, dans lequel la plaque supérieure et la plaque inférieure comprennent chacune :
des nervures d'engagement avec un tissu.

25. Système de matelas pneumatique pour bétail selon la revendication 23, dans lequel la plaque inférieure comporte une nervure inférieure (130) destinée à s'engager avec la nappe inférieure du matelas pneumatique pour bétail, et la plaque supérieure comporte une nervure supérieure destinée à s'engager avec la nappe supérieure du matelas pneumatique pour bétail ; et la nervure inférieure et la nervure supérieure sont sensiblement alignées l'une avec l'autre.

26. Système de matelas pneumatique pour bétail selon la revendication 23, dans lequel la plaque inférieure d'ancrage et la plaque supérieure définissent chacune des trous d'ancrage (106, 108) ; et l'ancrage comprend en outre : un organe d'ancrage au sol (120) s'étendant à travers au moins l'un des trous d'ancrage.

27. Système de matelas pneumatique pour bétail selon la revendication 14, dans lequel le matelas pneumatique pour bétail s'étend entre une pluralité de stalles pour animaux.

28. Système de matelas pneumatique pour bétail selon la revendication 14, dans lequel le matelas pneumatique pour bétail s'étend entre une pluralité de stalles, et est ancré au niveau de ses extrémités par le système d'ancrage.
